# EUROPÄISCHE PATENTSCHRIFT

(11) **EP 3 231 649 B1**
(45) Veröffentlichungstag und Bekanntmachung des Hinweises auf die Patenterteilung: **11.12.2019**
(21) Anmeldenummer: 17162184.0
(22) Anmeldetag: 21.03.2017
(51) Int. Cl.: B60J 1/20

(54) **BESCHATTUNGSSYSTEM FÜR EIN KRAFTFAHRZEUG**
SHADING SYSTEM FOR A MOTOR VEHICLE
SYSTÈME D'OMBRAGE POUR UN VÉHICULE AUTOMOBILE

(30) Priorität: 14.04.2016 DE 102016206301
(43) Veröffentlichungstag der Anmeldung: 18.10.2017
(73) Patentinhaber: BOS GmbH & Co. KG, 73760 Ostfildern (DE)
(72) Erfinder: Maier, Matthias, 73733 Esslingen (DE); Sauer, Roman, 72663 Grossbettlingen (DE)
(74) Vertreter: Patentanwälte Ruff, Wilhelm, Beier, Dauster & Partner mbB

(56) Entgegenhaltungen:
- EP-A1- 2 660 089
- DE-A1-102011 076 892
- JP-A- 2008 110 745

## Beschreibung

Die Erfindung betrifft ein Beschattungssystem für ein Kraftfahrzeug, das einem zweigeteilten Seitenfenster zugeordnet ist, mit einem Hauptbeschattungsgebilde, das auf einer Hauptwickelwelle zwischen einer Stauposition und einer Beschattungsposition auf- und abwickelbar gehalten ist, sowie mit einem Nebenbeschattungsgebilde, das auf einer Nebenwickelwelle zwischen einer Stauposition und einer Beschattungsposition auf- und abwickelbar gehalten ist, wobei das Hauptbeschattungsgebilde an einem in Abwickelrichtung vorderen Stirnendbereich mit einem Hauptauszugprofil und das Nebenbeschattungsgebilde an einem in Abwickelrichtung vorderen Stirnendbereich mit einem Nebenauszugelement versehen sind, die für eine Verlagerung zwischen den Stau- und Beschattungspositionen in fahrzeugfesten Führungsspuren längsverlagerbar sind.

Ein derartiges Beschattungssystem ist aus der DE 10 2011 076 892 A1 bekannt. Das bekannte Beschattungssystem ist für ein zweigeteiltes Seitenfenster eines Personenkraftwagens vorgesehen. Das Beschattungssystem weist ein flexibles Hauptbeschattungsgebilde sowie ein flexibles Nebenbeschattungsgebilde auf. Sowohl das Hauptbeschattungsgebilde als auch das Nebenbeschattungsgebilde sind jeweils auf einer eigenen Wickelwelle auf- und abwickelbar gelagert. Die beiden Wickelwellen sind ortsfest im Bereich des Seitenfensters positioniert und mittels eines Getriebes mechanisch miteinander gekoppelt, so dass die beiden Wickelwellen miteinander in Wirkverbindung sind. Die eine Wickelwelle für das Hauptbeschattungsgebilde ist etwa horizontal im Bereich einer Fensterbrüstung ausgerichtet. Die andere Wickelwelle für das Nebenbeschattungsgebilde ist etwa vertikal im Bereich eines Fenstersteges ausgerichtet. Das Hauptbeschattungsgebilde und das Nebenbeschattungsgebilde sind manuell aus einer Stauposition in die Beschattungsposition überführbar, wobei dem Nebenbeschattungsgebilde ein unterstützender Federantrieb zugeordnet ist, der bei einer Verlagerung des Hauptbeschattungsgebildes in Richtung der Beschattungsposition zwangsläufig eine analoge Verlagerung des Nebenbeschattungsgebildes aus der Stauposition in die Beschattungsposition bewirkt.

Ein Beschattungssystem für ein zweigeteiltes Seitenfenster ist auch aus der JP 2008-110745 A bekannt.

Aufgabe der Erfindung ist es, ein Beschattungssystem der eingangs genannten Art zu schaffen, das einfach aufgebaut ist und eine komfortable Überführung der Beschattungsgebilde zwischen der Stauposition und der Beschattungsposition ermöglicht.

Diese Aufgabe wird dadurch gelöst, dass das Hauptauszugprofil und das Nebenauszugelement an einer Seite in zueinander parallel verlaufenden, benachbarten Führungsspuren geführt sind, und dass dem Hauptauszugprofil eine Schleppeinrichtung zugeordnet ist, die das Nebenauszugelement bei einer Längsverlagerung aus der Stauposition in die Beschattungsposition mitnimmt. Das Hauptauszugprofil ist vorzugsweise auf gegenüberliegenden Seiten in zwei Führungsspuren parallel verlagerbar geführt. Das Nebenauszugelement ist vorzugsweise lediglich in einer einzelnen Führungsspur geführt, die zu der benachbarten Führungsspur der einen Seite des Hauptauszugprofils parallel verläuft. Das Nebenauszugelement bildet ein formstabiles Führungselement an dem Stirnendbereich des Nebenbeschattungsgebildes. Vorzugsweise ist das Nebenbeschattungsgebilde im Wesentlichen dreieckförmig ausgebildet, wohingegen das Hauptbeschattungsgebilde als im Wesentlichen viereckige Beschattungsbahn ausgeführt ist. Falls auch das Nebenbeschattungsgebilde im Wesentlichen viereckig ausgeführt ist, ist das Nebenauszugelement des Nebenbeschattungsgebildes vorzugsweise ebenfalls in zwei gegenüberliegenden Führungsspuren längsverlagerbar geführt. Die zueinander parallel verlaufenden, benachbarten Führungsspuren sind zwischen entsprechenden Beschattungsflächen des Hauptbeschattungsgebildes und des Nebenbeschattungsgebildes positioniert. Durch die erfindungsgemäße Lösung nimmt das Hauptauszugprofil bei einer Verlagerung aus der Stauposition in die Beschattungsposition das Nebenauszugelement zwangsläufig mit, so dass bei einem Abwickeln und demzufolge Ausziehen des Hauptbeschattungsgebildes automatisch auch das Nebenbeschattungsgebilde mit ausgezogen wird, ohne dass hierfür ein separater Antrieb benötigt wird. In vorteilhafter Weise können die beiden Wickelwellen für die beiden Beschattungsgebilde unterhalb einer Fensterbrüstung drehbar gelagert sein, um hierdurch eine durch eine entsprechende Fahrzeuginnenverkleidung verdeckte Unterbringung der Wickelwellen zu ermöglichen. Bei einer solchen Ausführung werden die beiden Beschattungsgebilde vorteilhaft im Wesentlichen in Fahrzeughochrichtung nach oben aus ihrer Stauposition in Richtung der Beschattungsposition ausgezogen, in der sie entsprechende Scheibenbereiche des Seitenfensters zumindest weitgehend vollständig verdecken. Die Nebenwickelwelle ist kinematisch von der Hauptwickelwelle getrennt und demzufolge unabhängig von der Hauptwickelwelle drehbar gelagert.

In Ausgestaltung der Erfindung weist die Schleppeinrichtung wenigstens ein an dem Hauptauszugprofil und/oder an dem Nebenauszugelement angeordnetes Mitnehmerelement auf, das zur formschlüssigen Mitnahme des Nebenauszugelementes in Längsverlagerungsrichtung ausgerichtet ausgebildet ist. Dabei ist das wenigstens eine Mitnehmerelement lediglich zur formschlüssigen Mitnahme in der einen Verlagerungsrichtung, nämlich aus der Stauposition in die Beschattungsposition, ausgebildet. Das wenigstens eine Mitnehmerelement koppelt das Hauptauszugprofil mit dem Nebenauszugelement mechanisch und formschlüssig bei einer Längsverlagerungsbewegung aus der Stauposition in die Beschattungsposition.

In weiterer Ausgestaltung der Erfindung ist das wenigstens eine Mitnehmerelement auf der Seite der benachbarten Führungsspuren an dem Hauptauszugprofil und/oder an dem Nebenauszugelement positioniert. Das wenigstens eine Mitnehmerelement ragt demzufolge vorzugsweise von dem Hauptauszugprofil aus zu dem Nebenauszugelement hin ab, damit das Hauptauszugprofil das Nebenauszugelement mitnehmen kann. In gleicher Weise kann vorgesehen sein, dass ein Mitnehmerelement am Nebenauszugelement angeordnet ist und in die Bewegungsbahn des Hauptauszugprofils hineinragt, so dass das Mitnehmerelement und damit auch das Nebenauszugelement bei einer Verlagerung des Hauptauszugprofils zwangsläufig mitgenommen werden. Alternativ ist es möglich, dass jeweils ein Mitnehmerelement sowohl am Hauptauszugprofil als auch am Nebenauszugelement vorgesehen ist, die miteinander derart komplementär zusammenwirken, dass sie bei einer Verlagerungsbewegung des Hauptauszugprofils formschlüssig miteinander kontaktiert werden.

In weiterer Ausgestaltung der Erfindung sind die benachbarten Führungsspuren zumindest weitgehend in Hochrichtung des Seitenfensters erstreckt. Vorzugsweise sind die Führungsspuren im Bereich eines Teilungssteges des zweigeteilten Seitenfensters positioniert. Führungsspuren können nut- oder schienenförmige Profilierungen, stegförmige Profilierungen oder ähnliches sein. Die benachbarten Führungsspuren können in einem gemeinsamen, einteiligen Schienenprofil integriert sein, oder aber in getrennten Schienenprofilen vorgesehen sein, die relativ zum Seitenfenster ortsfest und damit fahrzeugfest positioniert sind.

In weiterer Ausgestaltung der Erfindung sind an dem Hauptauszugprofil und an dem Nebenauszugelement zueinander komplementäre, in die jeweilige Bewegungsbahn des anderen hineinragende Mitnehmerelemente vorgesehen. Die Mitnehmerelemente treffen in Längsverlagerungsrichtungen der Führungsspuren formschlüssig aufeinander, um so die gewünschte Mitnahme zu bewirken.

In weiterer Ausgestaltung der Erfindung ist ein Antriebssystem vorgesehen, das das Hauptauszugprofil zwischen der Stauposition und der Beschattungsposition des Hauptbeschattungsgebildes zwangsgeführt verlagert. Das Antriebssystem weist vorzugsweise Gewindesteigungskabel auf, die in den Führungsspuren verlegt sind, und die durch wenigstens einen Elektromotor und ein geeignetes Getriebe angetrieben sind. In vorteilhafter Weise ist lediglich ein einzelner Elektromotor vorgesehen, der die Längsverlagerung des Hauptbeschattungsgebildes antreibt, indem er über das entsprechende Getriebe auf die beiden Gewindesteigungskabel einwirkt, die in den gegenüberliegenden seitlichen Führungsspuren für das Hauptauszugprofil angeordnet sind. Der Antrieb des Hauptauszugprofils bewirkt zwangsläufig aufgrund der Schleppeinrichtung auch eine Übertragung der Antriebsbewegung auf das Nebenauszugelement und demzufolge auf das Nebenbeschattungsgebilde. Das Antriebssystem treibt das Hauptauszugprofil und demzufolge das Hauptbeschattungsgebilde in beiden Längsverlagerungsrichtungen an, d. h. sowohl aus der Stauposition in die Beschattungsposition als auch aus der Beschattungsposition in die Stauposition.

In weiterer Ausgestaltung der Erfindung ist der Nebenwickelwelle eine Rückholfedereinrichtung zugeordnet, die die Nebenwickelwelle in Aufwickelrichtung drehmomentbeaufschlagt. Die Rückholfedereinrichtung dient zum sicheren Rückholen des Nebenbeschattungsgebildes in seine Stauposition.

In weiterer Ausgestaltung der Erfindung ist eine mechanische Koppeleinrichtung vorgesehen, die das Hauptauszugprofil mit dem Nebenauszugelement bei einer Längsverlagerung aus der Beschattungsposition in Richtung der Stauposition mitnimmt. Die mechanische Koppeleinrichtung gewährleistet, dass das Nebenauszugelement durch das Hauptauszugprofil auch wieder aus der Beschattungsposition in Richtung der Stauposition zurückgeführt werden kann, wenn die Schleppeinrichtung nicht mehr wirksam ist. Die mechanische Koppeleinrichtung ist demzufolge bevorzugt in entgegengesetzter Längsverlagerungsrichtung relativ zur Schleppeinrichtung zwischen Hauptauszugprofil und Nebenauszugelement wirksam.

In weiterer Ausgestaltung der Erfindung ist der mechanischen Koppeleinrichtung eine mechanische Steuereinrichtung zugeordnet, die das Nebenauszugelement von dem Hauptauszugprofil abhängig von einem Erreichen der Stauposition des Nebenauszugelementes entkoppelt. Die mechanische Steuereinrichtung ist vorteilhaft, wenn der Längsverlagerungsweg des Nebenauszugelementes für die Rückführung aus der Beschattungsposition in die Stauposition kürzer ist als der Längsverlagerungsweg des Hauptauszugprofils. Durch die mechanische Steuereinrichtung kann das Nebenauszugelement von dem Hauptauszugprofil abgekoppelt werden, sobald das Nebenauszugelement die Stauposition erreicht hat.

In weiterer Ausgestaltung der Erfindung weist die dem Nebenauszugelement zugeordnete Führungsspur im Bereich der Stauposition eine ortsfeste Steuerkontur auf, die mit einem beweglichen Koppelglied der Koppeleinrichtung abhängig von einer Bewegungsrichtung des Nebenauszugelementes derart zusammenwirkt, dass das Nebenauszugelement von dem Hauptauszugprofil entkoppelt oder mit diesem gekoppelt wird. Die ortsfeste Steuerkontur steuert das bewegliche Koppelglied der Koppeleinrichtung ein oder aus, je nachdem, ob das Nebenauszugelement mit dem Hauptauszugprofil gekoppelt oder von diesem entkoppelt werden soll. Ein Entkoppeln ist dabei lediglich in der Längsverlagerungsrichtung möglich, in der das Nebenauszugelement aus der Beschattungsposition in die Stauposition überführt wird. Bei einer Überführung des Hauptauszugprofils und des Nebenauszugelementes aus der Stauposition in die Beschattungsposition wird das Koppelglied zwar ebenfalls in Richtung seiner Koppelstellung verlagert, ohne dass diese Koppelstellung bei dieser Verlagerungsbewegung jedoch in Funktion ist. Denn bei dieser Verlagerungsbewegung übernimmt der wenigstens eine Mitnehmer die Übertragungsfunktion. In vorteilhafter Weise ist das Koppelglied als schwenkbewegliche Koppelklinke gestaltet, die mittels eines Steuerzapfens mit der ortsfesten Steuerkontur zusammenwirkt.

In weiterer Ausgestaltung der Erfindung weist das Nebenbeschattungsgebilde wenigstens einen Verstärkungsstreifen auf, der quer zu einer Verlagerungsrichtung des Nebenbeschattungsgebildes ausgerichtet ist. Diese Ausgestaltung ist vorteilhaft, falls das Nebenbeschattungsgebilde im Wesentlichen dreieckförmig ausgebildet ist und lediglich über eine einzelne seitliche Führungsspur mittels des Nebenauszugelementes verlagert wird. Durch den wenigstens einen Verstärkungsstreifen wird ein Einfallen des flexiblen Nebenbeschattungsgebildes bei einem Auf- oder Abwickelvorgang vermieden. Der Verstärkungsstreifen trägt dazu bei, dass das Nebenbeschattungsgebilde bei einer Verlagerungsbewegung zwischen der Stauposition und der Beschattungsposition großflächig aufgespannt bleibt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Darstellung eine Ausführungsform eines erfindungsgemäßen Beschattungssystems, wobei sowohl ein Hauptbeschattungsgebilde als auch ein Nebenbeschattungsgebilde in ihrer Stauposition dargestellt sind,
- Fig. 2: das Beschattungssystem nach Fig. 1 mit in die Beschattungsposition überführtem Hauptbeschattungsgebilde und Nebenbeschattungsgebilde,
- Fig. 3: aus relativ zu der Blickrichtung nach den Fig. 1 und 2 gegenüberliegender Blickrichtung einen Ausschnitt des Beschattungssystems analog den Fig. 1 und 2 im Bereich einer Kopplungseinrichtung für das Beschattungssystem,
- Fig. 4: die Kopplungseinrichtung gemäß Fig. 3 einschließlich eines Nebenauszugelementes,
- Fig. 5: in vergrößerter Darstellung den Ausschnitt nach Fig. 3 unter Weglassung von Führungsspuren,
- Fig. 6: in vergrößerter Darstellung die Kopplungseinrichtung gemäß Fig. 5 mit einem mittels einer ortsfesten Steuerkontur in einen Entkopplungszustand überführten Kopplungsglied und
- Fig. 7 bis 10: die Kopplungseinrichtung gemäß den Fig. 3 bis 6 in unterschiedlichen Steuerzuständen.

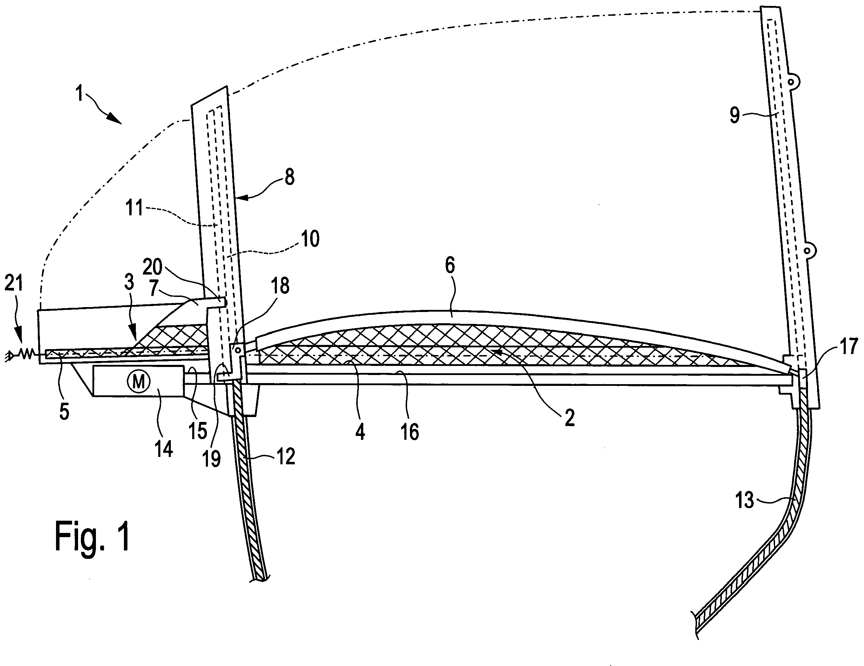

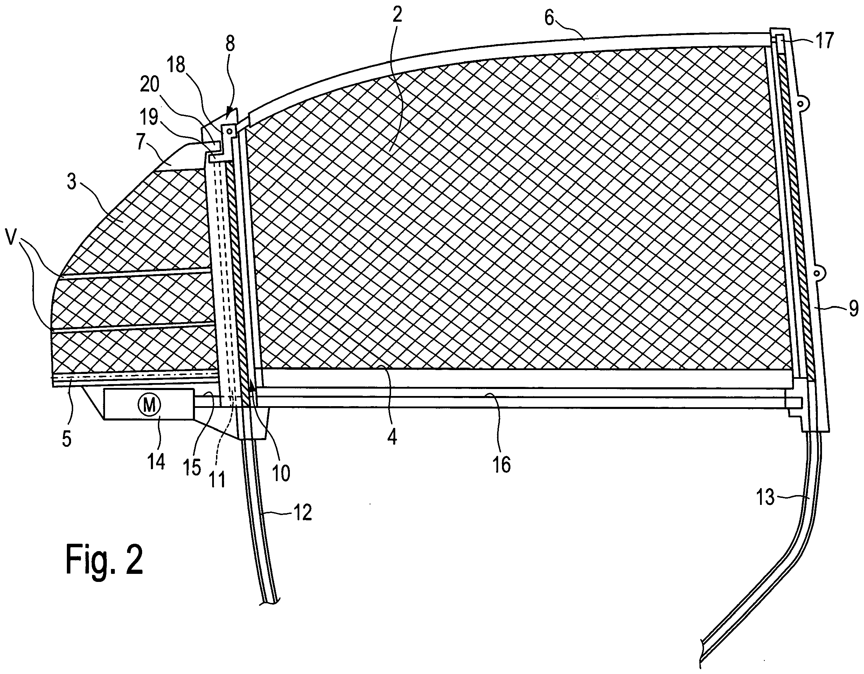

Ein Personenkraftwagen weist in einem Fondbereich eine Seitentür auf, die mit einem Beschattungssystem 1 gemäß den Fig. 1 und 2 versehen ist. Anhand der Fig. 1 und 2 ist ein Beschattungssystem 1 für eine - in normaler Fahrtrichtung des Personenkraftwagen gesehen - linke fondseitige Seitentür dargestellt. Das Beschattungssystem 1 dient zur innenseitigen Beschattung von Scheibenbereichen der Seitentür, deren obere Randkonturen anhand der Fig. 1 strichpunktiert angedeutet sind. Ein die Scheibenbereiche der Seitentür umfassendes Seitenfenster ist zweigeteilt, indem ein türfester Fenstersteg 8 einen größeren Hauptscheibenbereich von einem kleineren Nebenscheibenbereich trennt, der - in normaler Fahrtrichtung des Personenkraftwagens gesehen - hinter dem Hauptscheibenbereich positioniert ist.

Das Beschattungssystem 1 weist ein Hauptbeschattungsgebilde 2 auf, das in einer Beschattungsposition (Fig. 2) den Hauptscheibenbereich verdeckt. Das Beschattungssystem 1 weist zudem ein Nebenbeschattungsgebilde 3 auf, das in seiner Beschattungsposition (Fig. 2) den Nebenscheibenbereich des Seitenfensters der Seitentür verdeckt. Das Hauptbeschattungsgebilde 2 ist auf einer Hauptwickelwelle 4 auf- und abwickelbar gehalten, die unterhalb einer Fensterbrüstung der Seitentür ortsfest, d. h. türfest, angeordnet und drehbar gelagert ist. Eine Drehachse der Hauptwickelwelle 4 erstreckt sich zumindest weitgehend in Fahrzeuglängsrichtung. Das Hauptbeschattungsgebilde 2 ist im Wesentlichen in Fahrzeughochrichtung längs einer Innenseite des Hauptscheibenbereiches der Seitentür aus einer Stauposition gemäß Fig. 1 in eine Beschattungsposition gemäß Fig. 2 nach oben ausziehbar. In der Stauposition ist das Hauptbeschattungsgebilde 2 auf der Hauptwickelwelle 4 aufgewickelt, in der Beschattungsposition ist das Hauptbeschattungsgebilde 2 von der Hauptwickelwelle 4 abgewickelt und nach oben flächig aufgespannt. Um das Hauptbeschattungsgebilde 2 flächig aufspannen zu können, weist das Hauptbeschattungsgebilde 2 an seinem in Abwickelrichtung, d. h. in Auszugrichtung, vorderen Stirnendbereich ein formstabiles Hauptauszugprofil 6 auf, das an seinen gegenüberliegenden Stirnseiten mit Hilfe von Führungsgliedern 17, 18 in seitlichen Führungsspuren 9, 10 längsverlagerbar geführt ist, so dass das Hauptauszugprofil 6 zwischen der Stauposition und der Beschattungsposition relativ zu dem Hauptscheibenbereich zumindest weitgehend parallel verlagert wird. Die seitlichen Führungsspuren 9, 10 sind als Führungsschienen ausgeführt, die den Hauptscheibenbereich seitlich flankieren und türfest angeordnet sind. Die in den Zeichnungen gemäß den Fig. 1 und 2 linke Führungsspur 10 für das Hauptauszugprofil 6 ist in dem Fenstersteg 8 der Seitentür integriert. Das Führungsglied 18 ist wie auch das Führungsglied 17 Teil des Hauptauszugprofils 6. Die beiden Führungsglieder 17 und 18 für das Hauptauszugprofil 6, die in den seitlichen Führungsspuren 9 und 10 linearbeweglich verschiebbar geführt sind, sind jeweils mit einem Gewindesteigungskabel 12, 13 verbunden. Jedes Gewindesteigungskabel 12, 13 ist in nicht näher bezeichneten, türfest gehaltenen Kanälen linearbeweglich verschiebbar gelagert. Die beiden Gewindesteigungskabel 12, 13 sind flexibel ausgeführt und bilden Antriebsübertragungsmittel, die sowohl Zug- als auch Druckkräfte übertragen können. Im Bereich der seitlichen Führungsspuren 9 und 10 sind die Gewindesteigungskabel 12, 13 in entsprechenden Führungskanälen geführt, die parallel zu den seitlichen Führungsspuren 9 und 10 verlaufen. Die beiden Gewindesteigungskabel 12, 13 sind Teil eines Antriebssystems, um das Hauptbeschattungsgebilde 2 zwischen der Stauposition und der Beschattungsposition zu verlagern. Die Gewindesteigungskabel 12, 13 werden synchron angetrieben durch einen gemeinsamen Elektromotor 14, der mittels eines lediglich schematisch dargestellten Antriebsstranges 15, 16 synchron mit den beiden Gewindesteigungskabeln 12, 13 zusammenwirkt. Der Antriebsstrang 15, 16 weist ein Getriebe auf, das Schneckenräder umfasst, die mit den Gewindesteigungskabeln 12, 13 zusammenwirken. Zudem weist der Antriebsstrang 15, 16 eine Synchronisierwelle auf, die eine synchrone Antriebsübertragung der Antriebskraft des Elektromotors 14 auf die beiden Gewindesteigungskabel 12, 13 vornimmt. Der Elektromotor 14 und der Antriebsstrang 15, 16 sind der Hauptwickelwelle 4 des Hauptbeschattungsgebildes 2 unmittelbar räumlich zugeordnet, indem der Elektromotor 14 seitlich neben der Hauptwickelwelle 4 positioniert ist und der Antriebsstrang 15, 16 im Bereich der Wickelwelle 4 verläuft. Das Antriebssystem 14 bis 16 dient bei der dargestellten Ausführungsform nicht nur zur Antriebsübertragung auf die Gewindesteigungskabel 12, 13 und damit auf das Hauptauszugprofil 6, sondern auch zur Drehmomentübertragung auf die Wickelwelle 4 selbst, und zwar in beiden Wickelrichtungen. Dadurch ist ein spannungsarmes und gleichmäßiges Auf- und Abwickeln des Hauptbeschattungsgebildes 2 ermöglicht.

Das Beschattungssystem 1 weist zudem das Nebenbeschattungsgebilde 3 auf, das - wie das Hauptbeschattungsgebilde 2 - als flexibles Bahnmaterial ausgeführt ist und auf einer Nebenwickelwelle 5 auf- und abwickelbar gehalten ist. Die Nebenwickelwelle 5 ist ebenfalls unterhalb einer Fensterbrüstung türfest angeordnet und um eine Drehachse drehbar gelagert. In Aufwickelrichtung wirkt auf die Nebenwickelwelle 5 eine Rückholfedereinrichtung 21, die in Fig. 1 schematisch dargestellt ist. Die Nebenwickelwelle 5 erstreckt sich zumindest weitgehend in Fahrzeuglängsrichtung. Die Nebenwickelwelle 5 kann koaxial, parallel oder in geringer winkliger Verschränkung zur Hauptwickelwelle 4 ausgerichtet sein. Die Nebenwickelwelle 5 ist unabhängig von der Hauptwickelwelle 4 drehbar gelagert.

Das gesamte Beschattungssystem 1 ist auf einer einem Fahrzeuginnenraum zugewandten Innenseite der Seitentür positioniert.

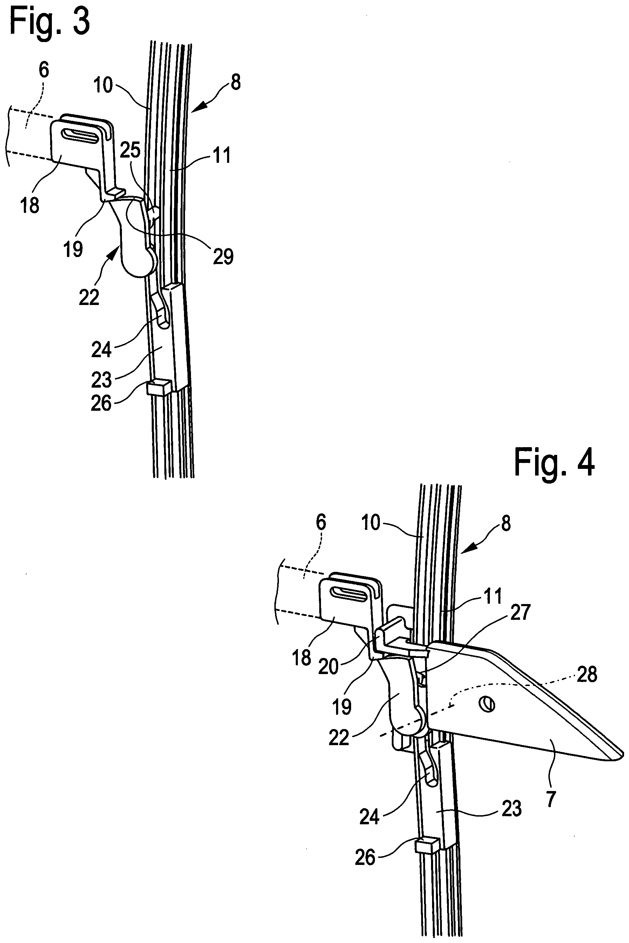

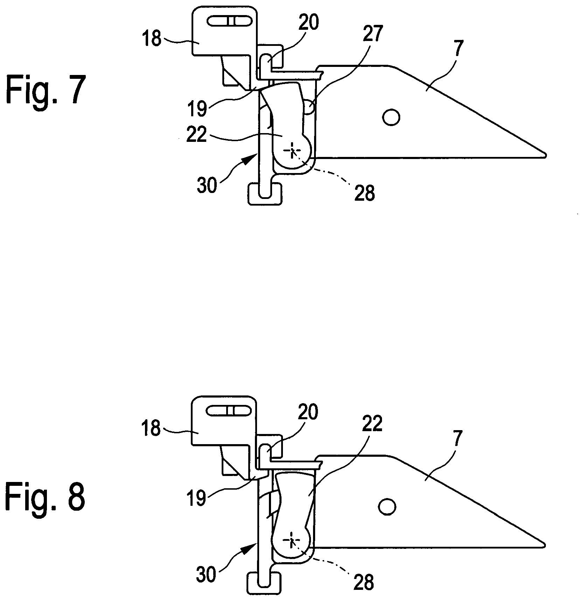

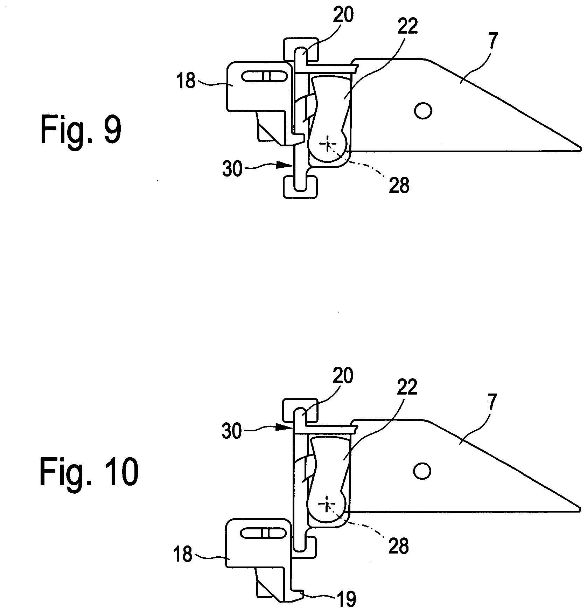

Das Nebenbeschattungsgebilde 3 erstreckt sich in seiner Beschattungsposition gemäß Fig. 2 zumindest weitgehend parallel zu dem Nebenscheibenbereich und verdeckt in der Beschattungsposition den Nebenscheibenbereich vollständig. Das Nebenbeschattungsgebilde 3 weist eine im Wesentlichen dreieckige Flächenform auf, wie anhand der Fig. 1 und 2 erkennbar ist. Das Nebenbeschattungsgebilde 3 ist an seinem in Abwickelrichtung, d. h. in Auszugrichtung, vorderen Stirnendbereich mit einem Nebenauszugelement 7 versehen, das formstabil gestaltet ist und nach Art einer dreieckigen Fahne geformt ist. Das Nebenauszugelement 7 ist fest mit dem Nebenbeschattungsgebilde 3 verbunden. Das Nebenauszugelement 7 ist, wie anhand der Fig. 4 und 7 bis 10 erkennbar ist, über einen Führungsgleiter 30 in einer Führungsspur 11 längsverlagerbar geführt. Die Führungsspur 11 ist der Führungsspur 10 für das Hauptauszugprofil 6 unmittelbar benachbart und verläuft parallel zu der Führungsspur 10. Die Führungsspur 11 ist in dem Fenstersteg 8 integriert und als Führungsschienenprofil ausgeführt. Da das Nebenbeschattungsgebilde 3 lediglich auf einer Seite in der seitlichen Führungsspur 11 geführt ist, weist das Nebenbeschattungsgebilde 3 zwei zueinander parallel beabstandete Verstärkungsstreifen V auf (Fig. 2), die sich über eine Breite des Nebenbeschattungsgebildes 3 erstrecken und die parallel zu einer Drehachse der Nebenwickelwelle 5 ausgerichtet sind. Die Verstärkungsstreifen V sind über ihre gesamte Länge durchgängig auf einer Oberfläche des Nebenbeschattungsgebildes 3 aufgebracht. Die Rückholfedereinrichtung 21 übt auf die Nebenwickelwelle 5 ein permanentes Drehmoment in Aufwickelrichtung aus, so dass das Nebenbeschattungsgebilde 3 ohne Einwirkung einer äußeren Kraft in seiner Stauposition gehalten bleibt.

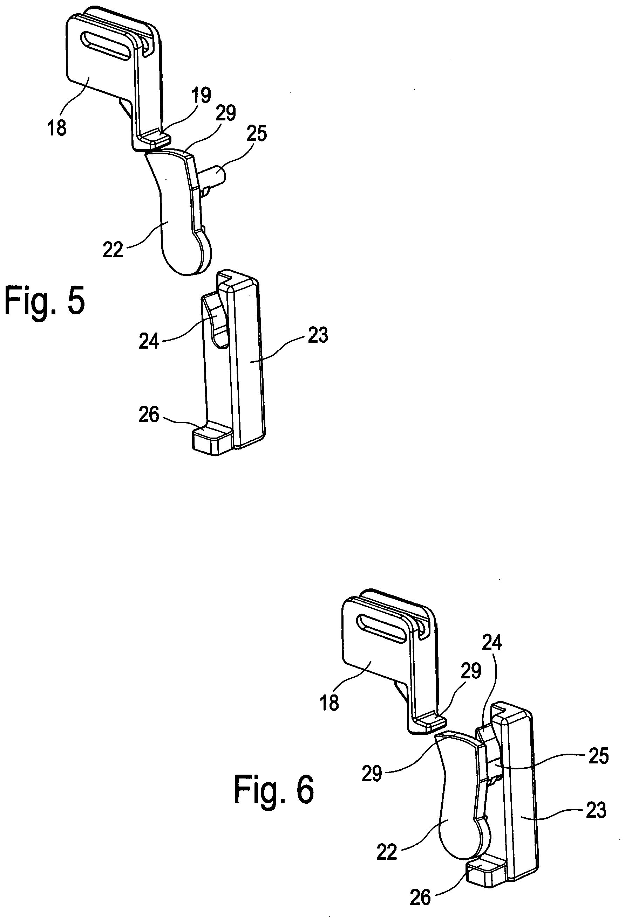

Um das Nebenbeschattungsgebilde 3 aus der Stauposition in die Beschattungsposition zu überführen, ist eine Schleppeinrichtung vorgesehen, die dem Hauptauszugprofil 6 des Hauptbeschattungsgebildes 2 zugeordnet ist und die das Nebenauszugelement 7 des Nebenbeschattungsgebildes 3 in Richtung der Beschattungsposition mitnimmt, sobald das Hauptbeschattungsprofil 6 aus der Stauposition in Richtung der Beschattungsposition nach oben verfahren wird. Die Schleppeinrichtung weist einen auch als Mitnehmerelement bezeichneten ersten Mitnehmer 19 an dem seitlichen Führungsglied 18 des Hauptauszugprofils 6 auf, das in der Führungsspur 10 linearbeweglich verschiebbar geführt ist. Ein zweiter, ebenfalls als Mitnehmerelement bezeichenbarer Mitnehmer 20 ist am Nebenauszugelement 7 angeordnet, der in die Bewegungsbahn des ersten Mitnehmers 19 hineinragt, so dass der zweite Mitnehmer 20 mit dem ersten Mitnehmer 19 formschlüssig in Kontakt gelangt, sobald das Führungsglied 18 sich bei seiner Längsverlagerung in der Führungsspur nach oben dem Nebenauszugelement 7 annähert. Der Mitnehmer 19 ist starr und einstückig mit dem Führungsglied 18 verbunden. Der Mitnehmer 20 ist starr und einstückig mit dem Nebenauszugelement 7 verbunden. Die Schleppeinrichtung ist anhand der Fig. 3 bis 10 detaillierter dargestellt.

Die Darstellung anhand der Fig. 3 bis 10 ist spiegelverkehrt zu der Darstellung gemäß den Fig. 1 und 2. Die Darstellung gemäß den Fig. 3 bis 10 ist demzufolge streng genommen der - in normaler Fahrtrichtung des Personenkraftwagens gesehen - rechten Seitentür zugeordnet, die in gleicher Weise mit einem Beschattungssystem 1 versehen ist, wie die anhand der Fig. 1 und 2 angedeutete linke Seitentür. Da die Ausgestaltung und Funktion bis auf die seitenverkehrte Anordnung bei beiden Beschattungssystemen jedoch identisch ist, gelten die nachfolgenden Ausführungen zu den Fig. 3 bis 10 in gleicher Weise für das Beschattungssystem 1 gemäß den Fig. 1 und 2.

Da die gegenüberliegenden seitlichen Führungsspuren 9, 10 für das Hauptauszugprofil 6 nicht exakt parallel zueinander verlaufen, ist dem Hauptauszugprofil 6 ein Teleskopausgleich zugeordnet, der relativ zu dem Führungsglied 18 quer zur Auszugrichtung des Hauptbeschattungsgebildes verschiebbar gelagert ist. Das Führungsglied 18 weist demzufolge ein anhand der Fig. 3 bis 6 gut erkennbares Langloch auf.

Anhand der Fig. 3 bis 10 ist zudem erkennbar, dass das Beschattungssystem 1 nicht nur eine Schleppeinrichtung für die Überführung des Nebenbeschattungsgebildes 3 aus der Stauposition in die Beschattungsposition aufweist, sondern dass zudem eine Koppeleinrichtung 22 bis 26 vorgesehen ist, die das Nebenauszugelement 7 auch bei einer entgegengerichteten Längsverlagerung nach unten aus der Beschattungsposition in Richtung der Stauposition mit dem Führungsglied 18 des Hauptauszugprofils 6 koppelt. Die mechanische Koppeleinrichtung 22 bis 26 weist ein klinkenförmiges Koppelglied 22 auf, das um eine Schwenkachse 28 an dem Nebenauszugelement 7 im Bereich des Führungsgleiters 30 schwenkbeweglich gelagert ist. Die Schwenkachse 28 ist derart ausgerichtet, dass das Koppelglied 22 in einer zu einer Aufspannebene des Nebenbeschattungsgebildes parallelen Ebene verschwenkbar ist. Die Schwenkbeweglichkeit des Koppelgliedes 22 relativ zu dem Nebenauszugelement 7 ist durch eine kreisbogenförmige Kulissenbahn 27 begrenzt. Das Koppelglied 22 weist an seinem oberen Stirnrand eine Anlagefläche 29 auf, die sich im Bereich einer Unterseite des Mitnehmers 19 des Führungsgliedes 18 des Hauptauszugprofils 6 formschlüssig abstützen kann. Das Koppelglied 22 ist im Bereich seiner Rückseite mit einem Steuerzapfen 25 versehen, der parallel zu der Schwenkachse 28 ausgerichtet ist. Der Steuerzapfen 25 durchragt die Kulissenbahn 27 und erstreckt sich über eine Rückseite des Nebenauszugelementes 7 hinaus, um in eine ortsfeste Steuerkontur 24 eines an dem Fenstersteg 8 befestigten Anschlagblockes 23 eintauchen zu können. Der Anschlagblock 23 ist im Bereich der Führungsspur 11 befestigt und definiert einen Endanschlag für die Stauposition des Nebenbeschattungsgebildes 3. Die Steuerkontur 24 weist eine Steuerschräge auf, die dazu dient, dass Koppelglied 22 aus der Koppelstellung relativ zu dem Mitnehmer 19 des Führungsgliedes 18 auszusteuern, um das Nebenauszugelement 7 von dem Hauptauszugprofil 6 zu entkoppeln. Dies ist erforderlich, da das Nebenauszugelement 7 bei einer Überführung aus der Beschattungsposition in die Stauposition einen kürzeren Weg zurücklegt als das Führungsglied 18 des Hauptauszugprofils 6. Denn die Stauposition für das Hauptbeschattungsgebilde 2 liegt unterhalb der Stauposition für das Nebenbeschattungsgebilde 3, wie anhand der Fig. 1 erkennbar ist. Die Steuerkontur 24 und der Steuerzapfen 25 sind Bestandteile einer Steuereinrichtung, die dazu vorgesehen ist, das Koppelglied 22 abhängig von einer Längsverlagerungsfunktion des Nebenauszugelementes mit dem Hauptauszugprofil 1 zu koppeln oder von diesem zu entkoppeln.

Bei einer Bewegung aus der Beschattungsposition in Richtung der Stauposition nach unten ist der Mitnehmer 19 des Führungsgliedes 18 gemäß den Fig. 3 und 4 demzufolge zwischen dem darüber liegenden Mitnehmer 20 des Nebenauszugelementes 7 und der darunter liegenden Anlagefläche 29 des Koppelgliedes 22 gefangen. Sobald das Nebenauszugelement 7 sich seiner Stauposition annähert, taucht der Steuerzapfen 25 des Koppelgliedes 22 in die Steuerkontur 24 des ortsfesten Anschlagblockes 23 ein und wird in Richtung des Nebenauszugelementes 7 zur Seite verschwenkt. Dadurch wird die Unterseite des Mitnehmers 19 des Führungsgliedes 18 freigegeben, so dass das Führungsglied 18 weiter nach unten verfahren werden kann. Das Koppelglied 22 hingegen parkt das Nebenauszugelement 7 in seiner unteren Endposition, d. h. in der Stauposition. Die Sicherung des Nebenauszugelementes 7 in der Stauposition erfolgt durch das Auftreffen des Nebenauszugelementes 7 auf einen Endanschlag 26, der ebenfalls an dem Anschlagblock 23 angeformt ist.

Sobald das Hauptauszugprofil 6 über das Antriebssystem aus der Stauposition wieder nach oben verlagert wird, nimmt der Mitnehmer 19 zwangsläufig den Mitnehmer 20 des Nebenauszugelementes 7 wieder mit, wodurch das Koppelglied wieder aus der taschenförmigen Steuerkontur 24 des Anschlagblockes 23 herausfährt und dabei in Richtung des Führungsgliedes 18 verschwenkt wird. Zur Unterstützung der Schwenkbewegung in Richtung seiner Koppelstellung, d. h. in Richtung des Führungsgliedes 18, kann die Schwenkachse 28 mit einer koaxial angeordneten Federeinrichtung versehen sein, die auf das Koppelglied 22 ein permanentes Drehmoment in Richtung der Koppelstellung ausübt. Sobald daher das Koppelglied 22 mit seinem Steuerzapfen 25 aus der Steuerkontur 24 frei kommt, wird das Koppelglied 22 zwangsläufig in die Koppelstellung nach links (gemäß den Zeichnungsdarstellungen der Fig. 3 bis 10) verschwenkt. Nun ist der Mitnehmer 19 des Führungsgliedes 18 wieder zwischen dem Koppelglied 22 und dem darüber positionierten Mitnehmer 20 des Nebenauszugelementes 7 gefangen, so dass eine durch das Antriebssystem initiierte Verlagerung des Hauptauszugprofils 6 eine zwangsläufige Mitnahme des Nebenauszugelementes 7 und demzufolge des Nebenbeschattungsgebildes 3 bewirkt.

## Patentansprüche

1. Beschattungssystem für ein Kraftfahrzeug, das einem zweigeteilten Seitenfenster zugeordnet ist, mit einem Hauptbeschattungsgebilde (2), das auf einer Hauptwickelwelle (4) zwischen einer Stauposition und einer Beschattungsposition auf- und abwickelbar gehalten ist, sowie mit einem Nebenbeschattungsgebilde (3), das auf einer Nebenwickelwelle (5) zwischen einer Stauposition und einer Beschattungsposition auf- und abwickelbar gehalten ist, wobei das Hauptbeschattungsgebilde (2) an einem in Abwickelrichtung vorderen Stirnendbereich mit einem Hauptauszugprofil (6) und das Nebenbeschattungsgebilde (3) an einem in Abwickelrichtung vorderen Stirnendbereich mit einem Nebenauszugelement (7) versehen sind, die für eine Verlagerung zwischen den Stau- und Beschattungspositionen in fahrzeugfesten Führungsspuren (9 bis 11) längsverlagerbar sind, wobei das Hauptauszugprofil (6) und das Nebenauszugelement (7) an einer Seite in zueinander parallel verlaufenden, benachbarten Führungsspuren (10, 11) geführt sind, **dadurch gekennzeichnet, dass** ein Längsverlagerungsweg des Nebenauszugelementes (7) für eine Rückführung aus der Beschattungsposition in die Stauposition kürzer ist als ein Längsverlagerungsweg des Hauptauszugprofils (6), und dass dem Hauptauszugprofil (6) eine Schleppeinrichtung zugeordnet ist, die das Nebenauszugelement (7) bei einer Längsverlagerung aus der Stauposition in die Beschattungsposition mitnimmt.

2. Beschattungssystem nach Anspruch 1, **dadurch gekennzeichnet**, das die Schleppeinrichtung wenigstens ein an dem Hauptauszugprofil (6) und/oder an dem Nebenauszugelement (7) angeordnetes Mitnehmerelement (19, 20) aufweist, das zur formschlüssigen Mitnahme des Nebenauszugelementes (7) in Längsverlagerungsrichtung ausgebildet ist.

3. Beschattungssystem nach Anspruch 2, **dadurch gekennzeichnet, dass** wenigstens ein Mitnehmerelement (19, 20) auf der Seite der benachbarten Führungsspuren (10, 11) an dem Hauptauszugprofil (6) und/oder an dem Nebenauszugelement (7) positioniert ist.

4. Beschattungssystem nach Anspruch 1, **dadurch gekennzeichnet, dass** die benachbarten Führungsspuren (10, 11) zumindest weitgehend in Hochrichtung des Seitenfensters erstreckt sind.

5. Beschattungssystem nach einem der vorhergehenden Ansprüche, **dadurch gekennzeichnet, dass** an dem Hauptauszugprofil (6) und an dem Nebenauszugelement (7) zueinander komplementäre, in die jeweilige Bewegungsbahn des anderen hineinragende Mitnehmerelemente (19, 20) vorgesehen sind.

6. Beschattungssystem nach einem der vorhergehenden Ansprüche, **dadurch gekennzeichnet, dass** ein Antriebssystem (14 bis 16) vorgesehen ist, das das Hauptauszugprofil (6) zwischen der Stauposition und der Beschattungsposition des Hauptbeschattungsgebildes (2) zwangsgeführt verlagert.

7. Beschattungssystem nach einem der vorhergehenden Ansprüche, **dadurch gekennzeichnet, dass** der Nebenwickelwelle (5) eine Rückholfedereinrichtung (21) zugeordnet ist, die die Nebenwickelwelle (5) in Aufwickelrichtung drehmomentbeaufschlagt.

8. Beschattungssystem nach einem der vorhergehenden Ansprüche, **dadurch gekennzeichnet, dass** eine mechanische Koppeleinrichtung vorgesehen ist, die das Hauptauszugprofil (6) mit dem Nebenauszugelement (7) bei einer Längsverlagerung aus der Beschattungsposition in Richtung der Stauposition koppelt.

9. Beschattungssystem nach Anspruch 8, **dadurch gekennzeichnet, dass** der mechanischen Koppeleinrichtung eine mechanische Steuereinrichtung zugeordnet ist, die das Nebenauszugelement (7) von dem Hauptauszugprofil (6) abhängig von einem Erreichen der Stauposition des Nebenauszugelementes (7) entkoppelt.

10. Beschattungssystem nach Anspruch 9, **dadurch gekennzeichnet, dass** die dem Nebenauszugelement (7) zugeordnete Führungsspur (11) im Bereich der Stauposition eine ortsfeste Steuerkontur (24) aufweist, die mit einem beweglichen Koppelglied (22) der Koppeleinrichtung abhängig von einer Bewegungsrichtung des Nebenauszugelementes (7) derart zusammenwirkt, dass das Nebenauszugelement (7) von dem Hauptauszugprofil (6) entkoppelt oder mit diesem gekoppelt wird.

11. Beschattungssystem nach einem der vorhergehenden Ansprüche, **dadurch gekennzeichnet, dass** das Nebenbeschattungsgebilde (3) wenigstens einen Verstärkungsstreifen (V) aufweist, der quer zu einer Verlagerungsrichtung des Nebenbeschattungsgebildes (3) ausgerichtet ist.

## Claims

1. Shading system for an automotive vehicle, which is assigned to a two-part split side window, comprising a main shading structure (2) which is held on a main winding shaft (4) for winding up and off between a stowed position and a shading position, and comprising an auxiliary shading structure (3) which is held on an auxiliary winding shaft (5) for winding up and off between a stowed position and a shading position, wherein the main shading structure (2) is provided with a main pull-out profile (6) on a face end region that is in front in the winding off direction and the auxiliary shading structure (3) is provided with an auxiliary pull-out element (7) on a face end region that is in front in the winding off direction, which are lengthwise displaceable in vehicle-fixed guiding tracks (9 to 11) for displacement between the stowed and shading positions, wherein the main pull-out profile (6) and the auxiliary pull-out element (7) are guided on one side in adjacent guiding tracks (10, 11) extending in parallel to each other, **characterized in that** a longitudinal displacement path of the auxiliary pull-out element (7) for returning from the shading position to the stowed position is shorter than the longitudinal displacement path of the main pull-out profile (6), and **in that** the main pull-out profile (6) is associated with a drag device entraining the auxiliary pull-out element (7) during a longitudinal displacement from the stowed position to the shading position.

2. Shading system according to claim 1, **characterized in that** the drag device includes at least one entrainer element (19, 20) disposed on the main pull-out profile (6) and/or on the auxiliary pull-out element (7), which entrainer element is configured for entraining the auxiliary pull-out element (7) in the longitudinal displacement direction in a form-fitting manner.

3. Shading system according to claim 2, **characterized in that** at least one entrainer element (19, 20) is positioned on the side of the adjacent guiding tracks (10, 11) on the main pull-out profile (6) and/or on the auxiliary pull-out element (7).

4. Shading system according to claim 1, **characterized in that** the adjacent guiding tracks (10, 11) extend at least largely in the vertical direction of the side window.

5. Shading system according to any of the preceding claims, **characterized in that** on the main pull-out profile (6) and on the auxiliary pull-out element (7) are provided mutually complementary entrainer elements (19, 20) projecting into the respective trajectory of the other one.

6. Shading system according to any of the preceding claims, **characterized in that** a drive system (14 to 16) is provided to displace the main pull-out profile (6) between the stowed position and the shading position of the main shading structure (2) in a forcedly guided manner.

7. Shading system according to any of the preceding claims, **characterized in that** the auxiliary winding shaft (5) is associated with a return spring device (21) to apply torque to the auxiliary winding shaft (5) in the winding-up direction.

8. Shading system according to any of the preceding claims, **characterized in that** a mechanical coupling device is provided to couple the main pull-out profile (6) to the auxiliary pull-out element (7) during a longitudinal displacement from the shading position in the direction towards the stowed position.

9. Shading system according to claim 8, **characterized in that** the mechanical coupling device is associated with a mechanical control device to decouple the auxiliary pull-out element (7) from the main pull-out profile (6) in response to the auxiliary pull-out element (7) reaching the stowed position.

10. Shading system according to claim 9, **characterized in that** the guiding track (11) associated with the auxiliary pull-out element (7) includes, in the region of the stowed position, a control contour (24) fixed in location, which control contour cooperates with a movable coupling member (22) of the coupling device in response to a direction of movement of the auxiliary pull-out element (7) in such a manner that the auxiliary pull-out element (7) is decoupled from or coupled to the main pull-out profile (6).

11. Shading system according to any of the preceding claims, **characterized in that** the auxiliary shading structure (3) includes at least one reinforcement strip (V) which is oriented transversely to a direction of displacement of the auxiliary shading structure (3).

## Revendications

1. Système d'ombrage pour un véhicule automobile associé à une vitre latérale scindée en deux, avec une structure d'ombrage principale (2) retenue sur un arbre d'enroulement principal (4) enroulable et déroulable entre une position de repos et une position d'ombrage, ainsi qu'avec une structure d'ombrage auxiliaire (3) retenue sur un arbre d'enroulement auxiliaire (5) enroulable et déroulable entre une position de repos et une position d'ombrage, dans lequel la structure d'ombrage principale (2) sur sa face d'extrémité frontale dans la direction de déroulement est pourvue d'un profilé de tirage principal (6) et la structure d'ombrage auxiliaire (3) sur sa face d'extrémité frontale dans la direction de déroulement est pourvue d'un élément de tirage auxiliaire (7), qui sont déplaçables longitudinalement dans des voies de guidage (9 à 11) fixées au véhicule pour un déplacement entre les positions de repos et d'ombrage, dans lequel le profilé de tirage principal (6) et l'élément de tirage auxiliaire (7) sont guidés sur un côté dans des voies de guidage (10, 11) adjacentes, s'étendant en parallèle l'une à l'autre, **caractérisé en ce qu'**une trajectoire de déplacement longitudinal de l'élément de tirage auxiliaire (7) pour un retour de la position d'ombrage vers la position de repos est plus courte qu'une trajectoire de déplacement longitudinal du profilé de tirage principal (6), et **en ce qu'**un dispositif traînant est associé au profilé de tirage principal (6), emmenant l'élément de tirage auxiliaire (7) au cours d'un déplacement longitudinal de la position de repos vers la position d'ombrage.

2. Système d'ombrage selon la revendication 1, **caractérisé en ce que** le dispositif traînant comprend au moins un élément entraîneur (19, 20) arrangé sur le profilé de tirage principal (6) et/ou sur l'élément de tirage auxiliaire (7), l'élément entraîneur étant configuré pour entraîner l'élément de tirage auxiliaire (7) par complémentarité de formes dans la direction de déplacement longitudinal.

3. Système d'ombrage selon la revendication 2, **caractérisé en ce que** au moins un élément entraîneur (19, 20) est positionné au côté des voies de guidage (10, 11) adjacentes sur le profilé de tirage principal (6) et/ou sur l'élément de tirage auxiliaire (7).

4. Système d'ombrage selon la revendication 1, **caractérisé en ce que** les voies de guidage (10, 11) adjacentes s'étendent au moins largement dans la direction verticale de la vitre latérale.

5. Système d'ombrage selon l'une quelconque des revendications précédentes, **caractérisé en ce que** sur le profilé de tirage principal (6) et sur l'élément de tirage auxiliaire (7) sont prévus des éléments entraîneur (19, 20) complémentaires l'un à l'autre et saillant dans la trajectoire respective de l'autre.

6. Système d'ombrage selon l'une quelconque des revendications précédentes, **caractérisé en ce qu'**un système de transmission (14 à 16) est prévu pour déplacer le profilé de tirage principal (6) entre la position de repos et la position d'ombrage de la structure d'ombrage principale (2) à guidage forcée.

7. Système d'ombrage selon l'une quelconque des revendications précédentes, **caractérisé en ce qu'**un dispositif à ressort de rappel (21) est associé à l'arbre d'enroulement auxiliaire (5) pour appliquer un couple à l'arbre d'enroulement auxiliaire (5) dans la direction d'enroulement.

8. Système d'ombrage selon l'une quelconque des revendications précédentes, **caractérisé en ce qu'**un dispositif de couplage mécanique est prévu pour coupler le profilé de tirage principal (6) à l'élément de tirage auxiliaire (7) au cours d'un déplacement longitudinal de la position d'ombrage en direction vers la position de repos.

9. Système d'ombrage selon la revendication 8, **caractérisé en ce qu'**un dispositif de commande mécanique est associé au dispositif de couplage mécanique pour découpler l'élément de tirage auxiliaire (7) du profilé de tirage principal (6) en réponse à l'élément de tirage auxiliaire (7) arrivant à la position de repos.

10. Système d'ombrage selon la revendication 9, **caractérisé en ce que** la voie de guidage (11) associée à l'élément de tirage auxiliaire (7) présente un contour de commande (24) stationnaire à proximité de la position de repos, le contour de commande coopérant avec un organe de couplage mobile (22) du dispositif de couplage en fonction d'une direction de mouvement de l'élément de tirage auxiliaire (7) de telle manière que l'élément de tirage auxiliaire (7) est couplé au ou découplé du profilé de tirage principal (6).

11. Système d'ombrage selon l'une quelconque des revendications précédentes, **caractérisé en ce que** la structure d'ombrage auxiliaire (3) présente au moins une bande de renforcement (V) orientée transversalement par rapport à une direction de déplacement de la structure d'ombrage auxiliaire (3).
